# FASCICULE DE BREVET EUROPEEN

(11) **EP 0 821 512 B1**
(45) Date de publication et mention de la délivrance du brevet: **07.07.2004**
(21) Numéro de dépôt: 97401742.8
(22) Date de dépôt: 21.07.1997
(51) Int. Cl.: H04M 3/54, H04M 3/38

(54) **Procédé de mise à disposition de services à des abonnés d'un réseau téléphonique**
Verfahren zum Anbieten von Dienstleistungen an Fernsprechnetzteilnehmer
Method for providing services to subscribers of a telephone network

(30) Priorité: 23.07.1996 FR 9609355
(43) Date de publication de la demande: 28.01.1998
(73) Titulaire: FRANCE TELECOM, 75015 Paris (FR)
(72) Inventeur: Chemin, François, 22300 Lannion (FR)
(74) Mandataire: Cabinet Martinet & Lapoux

(56) Documents cités:
- EP-A- 0 350 918
- EP-A- 0 609 016
- UDAYA SHANKAR ET AL: "INTERWORKING BETWEEN ACCESS PROTOCOL AND NETWORK PROTOCOL FOR INTERSWITCH ISDN SERVICES" INFORMATION TECHNOLOGIES FOR THE NINETIES - E2C2;ENERGY, ELECTRONI COMPUTERS, COMMUNICATIONS, BOMBAY, NOV. 22 - 24 NOV., 1989, no. CONF. 4, 22 novembre 1989, INSTITUTE OF ELECTRICAL AND ELECTRONICS ENGINEERS, pages 10-14, XP000203822

## Description

La présente invention concerne un procédé de mise à disposition de services à des abonnés d'un réseau téléphonique, et plus particulièrement à des abonnés rattachés à un commutateur numérique.

Grâce au développement des techniques de commutation, des services en arrivée, tels que le renvoi d'appel, l'indication d'appel en instance, etc., sont à présent proposés aux abonnés de réseaux téléphoniques actuels. De nouveaux services seront proposés dans les prochaines années, par exemple le rappel du dernier appelant, le filtrage d'appel et le renvoi d'appel sélectif. Ces services sont développés à partir de signalisation de type CCITT n° 7 et sont relativement longs et coûteux à mettre en oeuvre. Ils nécessitent l'utilisation de protocoles spécifiques.

Plus particulièrement, l'invention concerne l'offre de tels services dans un réseau téléphonique interdisant au moins deux renvois d'appel en cascade. A cet égard, selon la demande de brevet EP-A-0 350 918, une information de discrimination est associée aux données pour un terminal d'abonné dans un commutateur téléphonique afin d'éviter une cascade sans fin de renvois d'appel. Si l'information de discrimination associée à un premier terminal vers lequel les appels d'un second terminal devraient être envoyés est déjà enregistrée comme étant une destination alternative, l'enregistrement de l'information de discrimination associée au premier terminal comme étant un renvoi des appels du deuxième terminal est refusée.

Par ailleurs, la demande de brevet EP-A-0 609 016 concerne un service d'acceptation d'appel sélective mise en oeuvre dans des noeuds de service reliés à des commutateurs téléphoniques. Un noeud de service compare le numéro d'un appelant à une liste de numéros associée à un appelé afin d'accepter et d'acheminer l'appel lorsque le numéro de l'appelant est trouvé dans la liste.

Il est connu selon la EP-A-0 609 016 d'attribuer des numéros d'annuaire publié et non publié à un abonné dans un commutateur téléphonique. Un appel avec le numéro non publié est dirigé vers la ligne de l'appelé. Le commutateur associé à l'appelé renvoie un appel avec le numéro publié vers le noeud de service qui fournit le service désiré et initie un appel vers l'appelé avec le numéro non publié. L'attribution de deux numéros évite qu'avec seulement un numéro, tous les appels vers l'appelé, y compris ceux faits par le noeud de service, soient renvoyés vers le noeud de service, et donc évite une boucle récursive indésirable entre le noeud de service et l'appelé.

Afin de remédier à ces inconvénients et à l'attribution de plusieurs numéros d'annuaire à un abonné, la EP-A-0 609 016 préconise pour un abonné ayant un numéro d'appel prédéterminé -dans un commutateur de discriminer les appels vers l'abonné appelé depuis un noeud de service associé à l'appelé et ceux depuis un appelant quelconque. Si la demande d'appel n'est pas faite par le noeud de service, la demande d'appel est renvoyée vers le noeud de service pour fourniture de service. Si une demande d'appel est faite par le noeud de service, la demande d'appel est acheminée par le commutateur vers l'appelé ayant le numéro d'appel prédéterminé.

Cette solution impose une modification dans le commutateur associé à l'appelé, en ajoutant un discriminateur de numéro d'appelant pour distinguer un numéro d'appelant quelconque différent du numéro du noeud de service afin d'orienter l'appel vers le noeud de service, par rapport au numéro du noeud de service en tant qu'appelant afin d'orienter l'appel vers l'appelé.

La présente invention vise à remédier aux inconvénients précités, et à fournir un procédé simple, capable de mettre à disposition des abonnés analogiques et numériques des services nouveaux, ainsi que la plupart des services existants, et applicable dès à présent dans des réseaux téléphoniques sans modification des commutateurs téléphoniques.

A cette fin, un procédé de mise à disposition de services dans un serveur de services à un abonné d'un réseau téléphonique possédant un premier terminal rattaché à un premier commutateur téléphonique dudit réseau téléphonique, le réseau téléphonique interdisant au moins deux renvois d'appel en cascade, est caractérisé en ce que tous les appels à destination dudit premier terminal sont renvoyés par le premier commutateur vers le serveur de services rattaché à un second commutateur téléphonique du réseau téléphonique, et lorsque l'un des services fournis par le serveur de services nécessite un appel vers le premier terminal, un appel depuis le serveur de services est acheminé vers un second terminal qui est rattaché à un troisième commutateur téléphonique du réseau téléphonique et dont tous les appels qui lui sont destinés sont renvoyés par le troisième commutateur ou le second terminal vers le premier terminal. Typiquement, les second et troisième commutateurs téléphoniques sont un seul commutateur téléphonique, de préférence confondu avec le premier commutateur, de manière à économiser des circuits de communication.

Le procédé selon la présente invention est particulièrement adapté à des réseaux à commutateurs téléphoniques numériques qui interdisent deux renvois d'appel, ou de terminal, en cascade dans le réseau. Pour des réseaux téléphoniques dans lesquels un nombre supérieur à deux de renvois en cascade sont interdits, une chaîne de plusieurs seconds terminaux d'abonné en renvois de terminal successifs est utilisée.

Afin que les services relatifs à l'invention soient proposés à des terminaux d'abonné ne disposant pas d'écran, une interface vocale peut être couplée au serveur de services. L'abonné et le serveur de services peuvent ainsi dialoguer vocalement, et l'abonné peut de cette manière programmer des données dans une base de données du serveur de services le concernant.

Le second terminal d'abonné peut être un terminal d'abonné fictif inclus dans un autre serveur. De préférence, le second terminal d'abonné est alors accessible en Sélection Directe à l'Arrivée (SDA), afin que les appels qui lui sont destinés lui parviennent directement.

Un service de renvoi inconditionnel peut être proposé par la présente invention. Après chaque appel issu d'un terminal demandeur quelconque initialement destiné au premier terminal et reçu par le serveur de services, le serveur de services peut établir une communication avec un troisième terminal. Une communication entre le terminal demandeur quelconque et le serveur de services correspondant à l'appel issu du terminal demandeur quelconque peut ensuite être aboutée à la communication entre le serveur de services et le troisième terminal.

Ce service peut être mis en oeuvre également pour la dénumérotation, c'est-à-dire le transfert des appels vers un nouveau numéro de l'abonné.

Selon un service de renvoi sur occupation, après un premier appel issu d'un terminal demandeur quelconque initialement destiné au premier terminal et reçu par le serveur de services, un second appel issu du serveur de services destiné au second terminal est renvoyé par le troisième commutateur téléphonique ou le second terminal vers le premier terminal, et
si la ligne téléphonique desservant le premier terminal est occupée, le serveur de services établit une communication avec un troisième terminal, une communication entre le terminal demandeur quelconque et le serveur de services correspondant au premier appel étant ensuite aboutée à la communication entre le serveur de services et le troisième terminal, et
si la ligne téléphonique du premier terminal n'est pas occupée, une communication entre le terminal demandeur quelconque et le serveur de services correspondant au premier appel est aboutée à une communication entre le serveur de services et le premier terminal correspondant au second appel.

Un service de renvoi sur non-réponse, associé éventuellement à un service de réglage de la durée de tonalité d'appel, peut être prévu selon lequel après un premier appel issu d'un terminal demandeur quelconque initialement destiné au premier terminal et reçu par le serveur de services, un second appel issu du serveur de services destiné au second terminal est renvoyé par le troisième commutateur téléphonique ou le second terminal vers le premier terminal, et si la ligne téléphonique desservant le premier terminal n'est pas occupée,
en cas de réponse du premier terminal pendant une temporisation prédéterminée, une communication entre le terminal demandeur quelconque et le serveur de services correspondant au premier appel est aboutée à une communication entre le serveur de services et le premier terminal correspondant au second appel, et
à défaut de réponse du premier terminal pendant ladite temporisation prédéterminée, le serveur de services établit une communication avec un troisième terminal, et une communication entre le terminal demandeur quelconque et le serveur de services correspondant au premier appel est aboutée à la communication entre le serveur de services et le troisième terminal.

Afin d'obtenir un renvoi sélectif d'appels, l'abonné programme préalablement le numéro d'un terminal demandeur particulier dans le serveur de services au cours d'une communication avec ce dernier depuis le premier terminal, et
après un premier appel issu du terminal demandeur particulier initialement destiné au premier terminal et reçu par le serveur de services, le serveur de services établit une communication avec un troisième terminal, une communication entre le terminal demandeur particulier et le serveur de services correspondant au premier appel étant ensuite aboutée à la communication entre le serveur de services et le troisième terminal, et
après un second appel issu d'un autre terminal demandeur initialement destiné au premier terminal et reçu par le serveur de services, un troisième appel issu du serveur de services destiné au second terminal est renvoyé par le troisième commutateur téléphonique ou le second terminal vers le premier terminal et une communication entre l'autre terminal demandeur et le serveur de services correspondant au second appel est aboutée à une communication entre le serveur de services et le premier terminal correspondant au troisième appel.

Dans les services susmentionnés, de préférence l'abonné programme préalablement le numéro du troisième terminal dans le serveur de services au cours d'une communication avec ce dernier. L'abonné peut également programmer la durée de la temporisation dans le cas du renvoi sur non-réponse.

Un service de filtrage d'appel peut être fourni par la présente invention, selon lequel l'abonné programme dans le serveur de services, au cours d'une communication avec ce dernier depuis le premier terminal, le numéro d'un terminal demandeur particulier dont l'abonné ne souhaite pas recevoir d'appel, et, après un premier appel issu d'un autre terminal demandeur initialement destiné au premier terminal et reçu par le serveur de services, un second appel issu du serveur de services destiné au second terminal est renvoyé par le troisième commutateur téléphonique au le second terminal vers le premier terminal, une communication entre l'autre terminal demandeur et le serveur de services correspondant au premier appel étant ensuite aboutée à une communication entre le serveur de services et le premier terminal correspondant au second appel. Le serveur de services filtre ainsi les appels issus de demandeurs dont les numéros sont inscrits dans une base de données du serveur de services et présente à l'abonné les appels d'autres demandeurs.

Selon un service de présentation du numéro/nom, après chaque appel issu d'un demandeur quelconque initialement destiné au premier terminal et reçu par le serveur de services, un appel issu du serveur de services destiné au second terminal est renvoyé par le troisième commutateur téléphonique ou le second terminal vers le premier terminal de manière à établir une communication entre le serveur de services et le premier terminal pour indiquer à l'abonné le numéro et/ou le nom du demandeur quelconque. L'abonné peut alors choisir de répondre ou ne pas répondre à l'appel, ou peut indiquer au serveur de services le numéro d'un autre abonné vers qui le serveur de services peut renvoyer l'appel, ou proposer au demandeur quelconque de déposer un message dans un moyen de mémoire, dite boîte vocale.

Egalement, après chaque appel issu d'un demandeur quelconque initialement destiné à l'abonné et reçu par le serveur de services, le serveur de services peut mémoriser le numéro et/ou le nom du demandeur quelconque. Le numéro et/ou nom peut être consulté ultérieurement par l'abonné au cours d'une communication établie.avec le serveur de services. Ce dernier peut proposer à l'abonné d'établir une communication vers le demandeur quelconque.

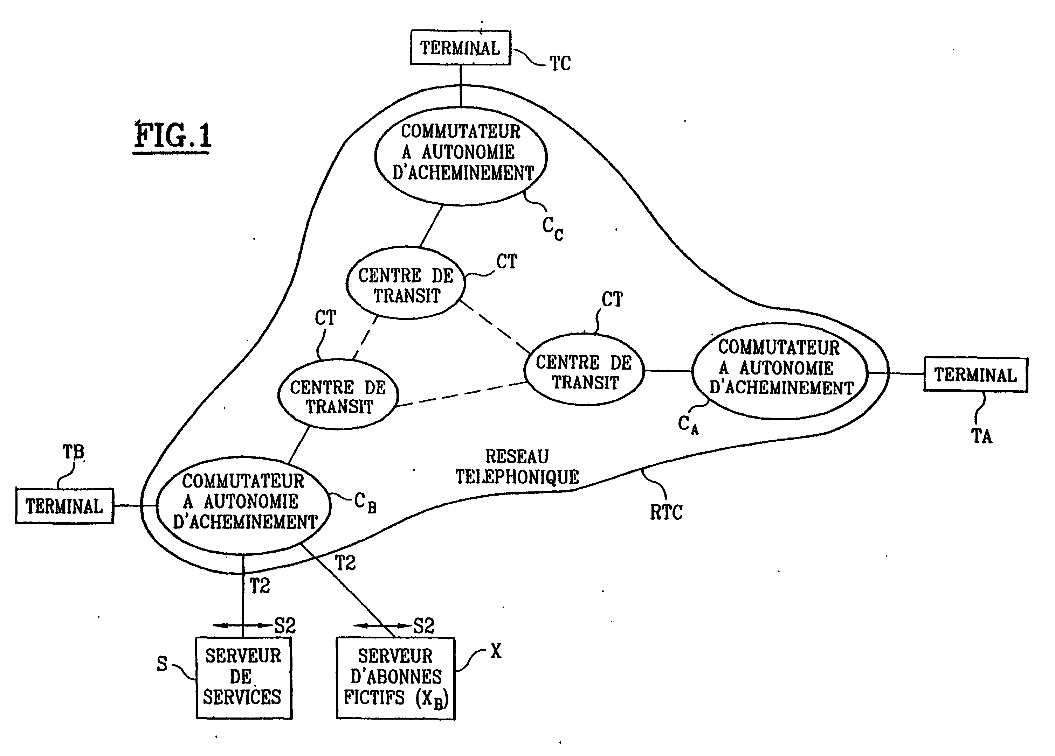

D'autres caractéristiques et avantages de la présente invention apparaîtront plus clairement à la lecture de la description suivante de plusieurs réalisations préférées de l'invention en référence à la figure 1 unique qui est un bloc-diagramme d'un système de mise à disposition de services à un abonné de réseau téléphonique selon l'invention.

En référence à la figure 1, des terminaux d'abonnés analogiques ou numériques TA, TB et TC sont raccordés à un réseau téléphonique commuté RTC. Le réseau téléphonique commuté RTC comprend classiquement des commutateurs à autonomie d'acheminement (CAA) C_{A}, C_{B} et C_{C} auxquels sont rattachés respectivement les terminaux d'abonné TA, TB et TC à travers des commutateurs locaux (non représentés). Le réseau RTC inclut en outre des centres de transit CT à travers lesquels les différents commutateurs à autonomie d'acheminement (CAA), dits également commutateurs de rattachement d'abonnés, sont reliés entre eux. Les terminaux d'abonné TA, TB et TC, lorsque, les abonnés correspondants sont des abonnés du Réseau Numérique à Intégration de Services (RNIS), sont raccordés aux commutateurs à autonomie d'acheminement en accès de base, c'est-à-dire au moyen de deux canaux B à 64 kbit/s chacun pour transmettre des informations entre les abonnés et le réseau et d'un canal D de signalisation à 16 ou 64 kbit/s pour gérer les communications sur les canaux B selon le protocole D. Les commutateurs de rattachement d'abonnés CAA sont typiquement des commutateurs numériques E10 de la société française ALCATEL, au des commutateurs numériques AXE10 de la société française MET. Les terminaux d'abonné TA, TB et TC sont par exemple des postes téléphoniques munis éventuellement d'un écran.

Dans la suite de la description, les repères TA, TB et TC désigneront indifféremment les terminaux d'abonné et les abonnés correspondants.

Conformément à l'invention, un serveur de services S est relié à un second commutateur de rattachement qui, dans la réalisation illustrée, est confondu avec le premier commutateur C_{B} de rattachement du terminal d'abonné TB. La liaison entre le serveur S et le commutateur C_{B} est réalisée en accès primaire par l'intermédiaire d'une interface RNIS classique de type T2 à 2048 kbit/s fournissant 30 canaux B d'information et 1 canal D de signalisation à 64 kbit/s. Le serveur S est par exemple un ordinateur PC (Personal Computer) ou une station de travail, et est équipé d'une ou plusieurs interfaces RNIS de type S2. Comme il sera expliqué ci-après, le serveur S fournit des services aux abonnés rattachés à son commutateur de rattachement, c'est-à-dire le commutateur C_{B}, et qui ont par avance souscrit à ces services. Ces abonnés, tels que l'abonné TB, sont par exemple des abonnés du réseau téléphonique commuté RTC possédant un terminal analogique, ou sont des abonnés du réseau RNIS, notamment du réseau RNIS-VN (Réseau Numérique à Intégration de Services - version Numérique).

Tout appel provenant d'un terminal d'abonné quelconque du réseau téléphonique commuté RTC, tel que le terminal TA, à destination du terminal TB, est renvoyé par le commutateur de rattachement C_{B} du terminal TB vers le serveur de services S. Ce renvoi de terminal/d'appel est réalisé au moyen d'un service conventionnel offert par le réseau RNIS.

Selon l'invention, un second serveur, dit serveur d'abonnés fictifs X, dont le rôle est d'assurer des communications vers le terminal TB, est en outre relié à un troisième commutateur de rattachement qui, dans la réalisation illustrée, est confondu avec le premier commutateur CB. En effet, pour transmettre une communication du terminal TA vers le terminal TB, il faut que le serveur de services S établisse une communication avec le terminal TB. Or un appel issu du serveur S ne peut être présenté au terminal TB puisque tous les appels à destination du terminal TB sont renvoyés vers le serveur S par le commutateur C_{B}. Le serveur d'abonnés fictifs X contient des numéros téléphoniques d'abonnés fictifs. Ces abonnés fictifs sont associés respectivement à des abonnés du réseau téléphonique RTC, tels que l'abonné TB, rattachés au commutateur de rattachement C_{B} du serveur de services S et ayant souscrit aux services relatifs à la présente invention et décrits plus loin. Le nombre d'abonnés fictifs est égal ou sensiblement inférieur au nombre d'abonnés rattachés au commutateur C_{B} et donc susceptibles de souscrire à ces services, soit environ 20.000 en pratique.

Le serveur d'abonnés fictifs X est par exemple un ordinateur PC (Personal Computer), ou une station de travail dédiée à l'application définie ci-dessus, équipé d'une ou plusieurs cartes d'interface S2 et raccordé en accès primaire au commutateur de rattachement C_{B} du serveur de services S par une interface T2. Chaque abonné fictif est de préférence accessible en Sélection Directe à l'Arrivée (SDA) dans le serveur X, c'est-à-dire accessible directement grâce à un numéro téléphonique composé pour partie du numéro téléphonique du serveur X et pour partie d'un numéro propre à l'abonné fictif. La sélection directe à l'arrivée est également un service offert par le RNIS.

En variante, le serveur de services S et le serveur d'abonnés fictifs X sont contenus dans un même ordinateur.

Au premier terminal TB, dont l'abonné correspondant a souscrit aux services relatifs à la présente invention, est donc associé un second terminal d'abonné, dit terminal d'abonné fictif X_{B}, dans le serveur X. Le terminal d'abonné fictif X_{B} est en outre en renvoi de terminal/d'appel permanent vers le premier terminal d'abonné TB. Ainsi, lorsque le serveur de services S décide d'établir une communication avec le terminal TB, le serveur S appelle le terminal d'abonné fictif X_{B} et l'appel est renvoyé vers le terminal TB par le commutateur C_{B} ou le terminal X_{B}. Les commutateurs numériques actuels, notamment les commutateurs E10N1 de la société ALCATEL, sont conçus de façon à interdire plusieurs renvois de terminal/d'appel en cascade dans le réseau téléphonique. En effet, un commutateur téléphonique qui reçoit un appel déjà renvoyé dans le réseau par un autre commutateur refuse systématiquement de renvoyer à nouveau cet appel. Par conséquent, même si le terminal TB est en permanence en renvoi de terminal vers le serveur S, l'appel issu du serveur S aboutit bien au terminal TB. Une communication est ainsi établie du serveur de services S vers le terminal d'abonné TB selon l'invention grâce à une particularité du service de renvoi de terminal/d'appel dans les réseaux téléphoniques.

Selon une première variante, le terminal d'abonné TB est un terminal analogique ne disposant pas d'écran. Les communications entre l'abonné TB et le serveur de services S sont alors réalisées vocalement par le biais d'une interface de messagerie vocale couplée au serveur S. Cette interface vocale est disponible dans le commerce et est parfois déjà intégrée à la carte d'interface S2. Eventuellement, le dialogue entre l'abonné TB et le serveur S est guidé par des messages d'information et d'instruction vocaux, le terminal d'abonné TB répondant par des messages à fréquences vocales en code DTMF (Dual-Tone Multifrequency), déclenchés par actionnement de touches du clavier du terminal. Selon une seconde variante, l'abonné TB dialogue avec le serveur de services S au moyen d'un terminal vidéotex, de type Minitel (marque déposée). Selon une troisième variante, le terminal TB est numérique et possède un écran permettant l'affichage d'informations fournies par le serveur. Selon une quatrième variante, l'abonné TB dialogue avec le serveur S qui contient des fonctions de reconnaissance vocale. Selon une cinquième variante, l'abonné TB dialogue avec le serveur S par l'intermédiaire du réseau INTERNET (marque déposée).

Ci-après sont décrits les différents services proposés par le serveur S selon la présente invention à l'abonné TB rattaché au même commutateur à autonomie d'acheminement C_{B}. Les messages de signalisation cités ci-après sont définis dans la Recommandation Q-931, Fascicule VI.11 du CCITT.
- Renvoi Inconditionnel : l'abonné TB souhaite que tous les appels qui sont destinés à son terminal TB soient systématiquement renvoyés vers un troisième terminal d'abonné TC.

L'abonné TB établit une communication avec le serveur S pour lui transmettre le numéro téléphonique du troisième terminal TC. Après chaque appel destiné au terminal TB, issu d'un terminal demandeur quelconque TA, et renvoyé vers le serveur S, le serveur S, ayant récupéré les numéros des terminaux TA et TB dans un message de signalisation RNIS "ETABLISSEMENT", envoie d'une part le retour d'appel vers le terminal TA, en transmettant un message de signalisation "ALERTE" à son commutateur de rattachement C_{B}, et d'autre part établit une communication avec le terminal TC. A cette fin, le serveur S utilise deux canaux d'information B, l'un pour recevoir l'appel du terminal TA, et l'autre pour la communication avec le terminal TC. Après avoir reçu des messages de signalisation successifs du type "ALERTE" et "CONNEXION" de son commutateur de rattachement C_{B} selon le protocole D, constituant le début de l'établissement d'une communication avec le terminal TC, le serveur S transmet un message "CONNEXION" au commutateur C_{B} pour établir une communication avec le terminal TA puis aboute les communications TA-S et S-TC. L'aboutement de ces communications est réalisé dans le serveur S au moyen d'une carte RNIS disponible dans le commerce, par exemple une carte fabriquée par la société française VOX.
- Renvoi Sur Occupation : tout appel d'un abonné demandeur, tel que l'abonné TA, vers l'abonné TB est renvoyé vers l'abonné TC lorsque la ligne téléphonique d'abonné desservant le terminal TB est occupée.

Préalablement, l'abonné TB établit une communication avec le serveur S pour lui indiquer le numéro téléphonique du terminal TC. Après chaque appel du terminal TA vers le terminal TB renvoyé vers le serveur S, le serveur S, ayant récupéré les numéros des terminaux TA et TB dans un message de signalisation RNIS "ETABLISSEMENT", renvoie le retour d'appel vers le terminal TA et teste l'état de la ligne téléphonique desservant le terminal TB en tentant d'établir une communication avec le terminal TB par l'intermédiaire de l'abonné fictif associé X_{B} dont le numéro téléphonique est contenu dans le serveur X, comme décrit précédemment. Si le serveur de services S reçoit selon le protocole D un message de signalisation RNIS du type "DECONNEXION" avec une "CAUSE 17", la ligne du terminal TB est occupée. Le serveur S rompt alors l'établissement de la communication avec le terminal TB en envoyant au commutateur C_{B} un message "LIBERATION", appelle le terminal TC et aboute les communications TA-S et S-TC de la même manière que ci-dessus. Si la ligne du terminal TB n'est pas occupée, le serveur S aboute une communication TA-S et une communication S-TB.
- Renvoi sur non-réponse : tout appel d'un abonné demandeur quelconque, tel que l'abonné TA, vers l'abonné TB est renvoyé vers l'abonné TC en cas de non-réponse de l'abonné TB.

Suite à un appel du terminal TA vers le terminal TB renvoyé vers le serveur S, qui récupère les numéros des terminaux TA et TB dans un message "ETABLISSEMENT" le terminal TA reçoit comme précédemment le retour d'appel, par l'envoi du message "ALERTE" du serveur S vers son commutateur de rattachement C_{B}. Le serveur S teste ensuite la ligne du terminal TB comme décrit ci-dessus, et, si elle est occupée, après avoir rompu l'établissement de la communication avec le terminal TB, le serveur S envoie un message "DECONNEXION" avec "CAUSE 17" au commutateur C_{B} de sorte que le terminal TA reçoive une tonalité d'occupation. Si la ligne du terminal TB n'est pas occupée, et après avoir reçu un message "ALERTE" du commutateur C_{B}, le serveur S déclenche une temporisation d'attente de réception d'un message "CONNEXION". Si cette temporisation expire avant la réception de ce message, le serveur effectue un aboutement de communications TA-S et S-TC. Sinon, une communication est établie entre le serveur S et le terminal TB par l'intermédiaire du serveur X, et le serveur S envoie vers le commutateur C_{B} un message "CONNEXION" et aboute la communication TA-S et la communication S-TB. La valeur de la temporisation précitée peut être réglée par l'abonné TB au cours d'une communication avec le serveur de services S.
- Filtrage d'appel : l'abonné TB souhaite que les appels provenant d'abonnés particuliers, tels que l'abonné TA, dont les numéros téléphoniques ont été inscrits par l'abonné TB dans une base de données du serveur de services S, au moyen d'un terminal de type vidéotex par exemple, ne lui soient pas présentés.

Ainsi, suite à un appel du terminal TA vers le terminal TB renvoyé vers le serveur S, qui récupère les numéros des terminaux TA et TB dans un message de signalisation "ETABLISSEMENT", le serveur S envoie un message "ALERTE" puis un message "CONNEXION" à son commutateur de rattachement C_{B} et transmet au terminal TA un message vocal du type "votre appel ne peut être présenté à votre correspondant". En variante, le serveur S n'envoie pas de message de signalisation "CONNEXION" à son commutateur C_{B}, de sorte que le terminal TA reçoit le retour d'appel pendant une temporisation prédéterminée, à l'expiration de laquelle le terminal TA reçoit une tonalité d'occupation. Si l'appel du terminal TA ne doit pas être filtré, le serveur S renvoie cet appel vers le terminal TB, par aboutement d'une communication TA-S et d'une communication S-TB comme déjà expliqué.
- Renvois sélectif sur liste : les appels vers l'abonné TB issus d'abonnés, tels que l'abonné TA, dont les numéros téléphoniques sont inscrits dans une base de données du serveur de services S, sont renvoyés par le serveur S vers le terminal TC par aboutement de communications TA-S et S-TC. Les appels d'autres abonnés non inscrits dans ladite base de données sont présentés à l'abonné TB.
- Présentation du numéro/nom : le numéro et le nom d'un abonné demandeur quelconque TA est transmis à l'abonné TB.

Selon une première variante, suite à l'appel du terminal TA vers le terminal TB renvoyé vers le serveur S, ce dernier établit une communication avec l'abonné demandeur TA pour lui demander son nom, le numéro téléphonique du terminal TA ayant déjà été transmis du commutateur C_{A} au commutateur C_{B}, puis au serveur S selon le protocole D. Le serveur S établit alors une communication avec l'abonné TB par l'intermédiaire de l'abonné fictif correspondant X_{B} dans le serveur d'abonnés fictifs X, et transmet au terminal TB par exemple le message vocal "Prénom Nom ou Numéro X souhaite vous joindre, acceptez-vous cet appel ?". L'abonné TB répond au serveur S par exemple en appuyant sur des touches du clavier à fréquences vocales en code DTMF. Si l'abonné TB accepte l'appel, le serveur S aboute la communication TA-S et la communication S-TB. Sinon, l'abonné TB signale éventuellement au serveur de services S vers qui renvoyer l'appel, ou ne répond pas.
- Rappel du dernier appelant : le serveur de services S garde en mémoire le nom et le numéro des derniers demandeurs qui lui sont transmis comme décrit précédemment. L'abonné TB peut ainsi consulter la base de données du serveur S le concernant pour connaître l'identité d'un demandeur et le serveur S peut lui proposer d'établir un appel vers ce correspondant.
- dénumérotation : Si l'abonné TB a changé de numéro, le serveur S renvoie tous les appels pour l'abonné TB vers le terminal désigné par son nouveau numéro.

Selon une autre réalisation de la présente invention, applicable lorsqu'un service de transfert d'appel explicite ["Explicit Call Transfer" (ECT)] est disponible dans le réseau RNIS, tous les aboutements de communication réalisés par le serveur de services S et décrits ci-dessus sont effectués directement par le commutateur numérique de rattachement C_{B} du terminal TB. Ainsi, lorsque par exemple le serveur S reçoit un appel du terminal TA destiné au terminal TB et à renvoyer vers le terminal TC, le serveur S établit une communication avec le terminal TC puis une communication avec le terminal TA de manière à obtenir une communication entre trois abonnés, puis se retire de la communication après échange de messages protocolaires avec le commutateur C_{B} qui relie ensuite les terminaux TA et TC communiquant entre eux.

La présente invention n'est pas limitée à la mise à disposition de services à des abonnés d'un seul commutateur à autonomie d'acheminement CAA. A chaque commutateur CAA peut être rattaché un serveur de services conforme à l'invention, un même serveur pouvant d'ailleurs être relié à plusieurs commutateurs.

En outre, comme déjà précisé, le serveur de services S et le serveur d'abonnés fictifs X ne sont pas nécessairement rattachés au même commutateur C_{B}, mais peuvent être rattachés à des commutateurs téléphoniques différents l'un de l'autre, et différents du commutateur de rattachement C_{B} de l'abonné TB qui a souscrit aux services susmentionnés. Le rattachement des serveurs S et X à un commutateur commun C_{B} permet toutefois de réduire les voies d'acheminement empruntées par les communications entre les serveurs S et X et le terminal TB.

L'invention n'est non plus pas limitée à des commutateurs de rattachement CAA de type E10. Tout réseau à commutateurs interdisant au moins deux renvois de terminal/d'appel en cascade est approprié.

Le commutateur C_{B} peut par ailleurs être un autocommutateur privé (PABX) desservant une installation téléphonique d'abonné incluant le terminal TB et les serveurs S et X.

La présente invention fournit donc des services bien moins coûteux à mettre en oeuvre qu'une solution utilisant la signalisation CCITT n° 7, et surtout très souples dans leur application. Ces services peuvent en effet être proposés à des abonnés analogiques et des abonnés ne disposant pas de terminaux à écran grâce au dialogue vocal entre les abonnés et le serveur de services. En outre, les services offerts sont programmables à distance par les abonnés de sorte que ceux-ci peuvent gérer des agendas, c'est-à-dire programmer les dates et heures auxquelles ils envisagent d'utiliser ces services.

## Revendications

1. Procédé de mise à disposition de services dans un serveur de services (S) à un abonné d'un réseau téléphonique (RTC) possédant un premier terminal (TB) rattaché à un premier commutateur téléphonique (C_{B}) dudit réseau téléphonique, le réseau téléphonique (RTC) interdisant au moins deux renvois d'appel en cascade, **caractérisé en ce que** tous les appels à destination dudit premier terminal (TB) sont renvoyés par ledit premier commutateur (C_{B}) vers le serveur de services (S) rattaché à un second commutateur téléphonique dudit réseau téléphonique (RTC), et lorsque l'un des services fournis par le serveur de services (S) nécessite un appel vers le premier terminal (TB) , un appel depuis le serveur de services (S) est acheminé vers un second terminal (X_{B}) qui est rattaché à un troisième commutateur téléphonique dudit réseau téléphonique (RTC) et dont tous les appels qui lui sont destinés sont renvoyés par le troisième commutateur ou le second terminal (X_{B}) vers le premier terminal (TB).

2. Procédé conforme à la revendication 1, selon lequel les second et troisième commutateurs téléphoniques sont un même commutateur téléphonique, de préférence confondu avec le premier commutateur téléphonique (C_{B}).

3. Procédé conforme à la revendication 1 ou 2, selon lequel une interface vocale (S2) est couplée audit serveur de services (S).

4. Procédé conforme à l'une quelconque des revendications 1 à 3, selon lequel ledit second terminal (X_{B}) est un terminal d'abonné fictif inclus dans un serveur (X) et est accessible, de préférence en Sélection Directe à l'Arrivée (SDA).

5. Procédé conforme à l'une quelconque des revendications 1 à 4, selon lequel après chaque appel issu d'un terminal demandeur quelconque (TA) initialement destiné au premier terminal (TB) et reçu par le serveur de services (S), le serveur de services (S) établit une communication avec un troisième terminal (TC) , une communication entre le terminal demandeur quelconque (TA) et le serveur de services (S) correspondant audit appel issu du terminal demandeur quelconque (TA) étant ensuite aboutée à la communication entre le serveur de services (S) et le troisième terminal (TC).

6. Procédé conforme à l'une quelconque des revendications 1 à 4, selon lequel après un premier appel issu d'un terminal demandeur quelconque (TA) initialement destiné au premier terminal (TB) et reçu par le serveur de services (S) , un second appel issu du serveur de services (S) destiné au second terminal (X_{B}) est renvoyé par le troisième commutateur téléphonique ou le second terminal (X_{B}) vers le premier terminal (TB), et
si la ligne téléphonique desservant le premier terminal (TB) est occupée, le serveur de services (S) établit une communication avec un troisième terminal (TC), une communication entre le terminal demandeur quelconque (TA) et le serveur de services (S) correspondant au premier appel étant ensuite aboutée à la communication entre le serveur de services (S) et le troisième terminal (TC), et
si la ligne téléphonique du premier terminal (TB) n'est pas occupée, une communication entre le terminal demandeur quelconque (TA) et , le serveur de services (S) correspondant au premier appel est aboutée à une communication entre le serveur de services (S) et le premier terminal (TB) correspondant au second appel.

7. Procédé conforme à l'une quelconque des revendications 1 à 4, selon lequel après un premier appel issu d'un terminal demandeur quelconque (TA) initialement destiné au premier terminal (TB) et reçu par le serveur de services (S) , un second appel issu du serveur de services (S) destiné au second terminal (X_{B}) est renvoyé par le troisième commutateur téléphonique ou le second terminal (XB) vers le premier terminal (TB) , et si la ligne téléphonique desservant le premier terminal (TB) n'est pas occupée,
en cas de réponse du premier terminal (TB) pendant une temporisation prédéterminée, une communication entre le terminal demandeur quelconque (TA) et le serveur de services (S) correspondant au premier appel est aboutée à une communication entre le serveur de services (S) et le premier terminal (TB) correspondant au second appel, et
à défaut de réponse du premier terminal (TB) pendant ladite temporisation prédéterminée, le serveur de services (S) établit une communication avec un troisième terminal (TC), et une communication entre le terminal demandeur quelconque (TA) et le serveur de services (S) correspondant au premier appel est aboutée à la communication entre le serveur de services (S) et le troisième terminal (TC).

8. Procédé conforme à l'une quelconque des revendications 1 à 4, selon lequel ledit abonné programme préalablement le numéro d'un terminal demandeur particulier dans le serveur de services (S) au cours d'une communication avec ce dernier depuis le premier terminal (TB), et
après un premier appel issu du terminal demandeur particulier initialement destiné au premier terminal (TB) et reçu par le serveur de services (S), le serveur de services (S) établit une communication avec un troisième terminal (TC), une communication entre le terminal demandeur particulier et le serveur de services (S) correspondant au premier appel étant ensuite aboutée à la communication entre le serveur de services (S) et le troisième terminal (TC), et
après un second appel issu d'un autre terminal demandeur initialement destiné au premier terminal (TB) et reçu par le serveur de services (S), un troisième appel issu du serveur de services (S) destiné au second terminal (X_{B}) est renvoyé par le troisième commutateur téléphonique ou le second terminal (X_{B}) vers le premier terminal (TB) et une communication entre l'autre terminal demandeur et le serveur de services (S) correspondant au second appel est aboutée à une communication entre le serveur de services (S) et le premier terminal (TB) correspondant au troisième appel.

9. Procédé conforme à l'une quelconque des revendications 1 à 4, selon lequel ledit abonné programme dans le serveur de services (S), au cours d'une communication avec ce dernier depuis le premier terminal (TB), le numéro d'un terminal demandeur particulier dont l'abonné ne souhaite pas recevoir d'appel, et, après un premier appel issu d'un autre terminal demandeur initialement destiné au premier terminal (TB) et reçu par le serveur de services (S), un second appel issu du serveur de services (S) destiné au second terminal (X_{B}) est renvoyé par le troisième commutateur téléphonique ou le second terminal (X_{B}) vers le premier terminal (TB) , une communication entre l'autre terminal demandeur et le serveur de services (S) correspondant au premier appel étant ensuite aboutée à une communication entre le serveur de services (S) et le premier terminal (TB) correspondant au second appel.

10. Procédé conforme à l'une quelconque des revendications 1 à 4, selon lequel après chaque appel issu d'un demandeur quelconque (TA) initialement destiné au premier terminal (TB) et reçu par le serveur de services (S), un appel issu du serveur de services (S) destiné au second terminal (X_{B}) est renvoyé par le troisième commutateur téléphonique ou le second terminal (X_{B}) vers le premier terminal (TB) et le serveur de services (S) transmet au premier terminal (TB) le numéro et/ou le nom du demandeur quelconque (TA).

11. Procédé conforme à l'une quelconque des revendications 1 à 4, selon lequel après chaque appel issu d'un demandeur quelconque (TA) initialement destiné à l'abonné et reçu par le serveur de services (S), le serveur de services (S) mémorise le numéro et/ou le nom du demandeur quelconque (TA), lequel numéro et/ou nom peut être consulté ultérieurement par l'abonné (TB) au cours d'une communication établie avec le serveur de services (S).

## Patentansprüche

1. Verfahren zur Bereitstellung von Diensten in einem Server für Dienste (S) für einen Teilnehmer eines Telefonnetzes (RTC), der ein erstes Endgerät (TB) besitzt, das an einen ersten Telefonvermittler (C_{B}) des Telefonnetzes angeschlossen ist, wobei das Telefonnetz (RTC) zwei und mehr aufeinanderfolgende Anrufweiterschaltungen verbietet, **dadurch gekennzeichnet, dass** alle Anrufe mit der ersten Endgerät (TB) als Ziel durch den ersten Vermittler (C_{B}) zu einem Server für Dienste (S) weitergeleitet werden, der an einen zweiten Telefonvermittler des Telefonnetzes (RTC) angeschlossen ist, und wenn einer der durch den Server für Dienste (S) bereitgestellten Dienste ein Anruf bei dem ersten Endgerät (TB) erfordert, ein Anruf von dem Server für Dienste (S) zu einem zweiten Endgerät (X_{B}) geleitet, das an einen dritten Telefonvermittler des Telefonnetzes (RTC) angeschlossen ist und von dem alle Anrufe, die für ihn bestimmt sind, durch den dritten Vermittler oder das zweite Endgerät (X_{B}) zu dem ersten Endgerät (TB) weitergeleitet werden.

2. Verfahren nach Anspruch 1, wobei der zweite und dritte Telefonvermittler ein und derselbe Telefonvermittler sind, der vorzugsweise mit dem ersten Telefonvermittler (C_{B}) verschmolzen ist.

3. Verfahren nach Anspruch 1 oder 2, wobei eine Sprachschnittstelle (S2) an den Server für Dienste (S) angekoppelt ist.

4. Verfahren nach einem der Ansprüche 1 bis 3, wobei das zweite Endgerät (X_{B}) ein fiktives Teilnehmerendgerät ist, das in einem Server (X) enthalten ist und, vorzugsweise mit direkter Einwahl (DDI) zugänglich ist.

5. Verfahren nach einem der Ansprüche 1 bis 4, wobei nach jedem Anruf, der von einem beliebigen rufenden Endgerät (TA) kommt und anfänglich für das erste Endgerät (TB) bestimmt ist und durch den Server für Dienste (S) empfangen wird, der Server für Dienste (S) eine Verbindung mit einem dritten Endgerät (TC) herstellt, wobei eine Verbindung zwischen dem beliebigen rufenden Endgerät (TA) und dem Server für Dienste (S), die dem von dem beliebigen rufenden Endgerät (TA) kommenden Anruf entspricht, dann mit der Verbindung zwischen dem Server für Dienste (S) und dem dritten Endgerät (TC) zusammengeführt wird.

6. Verfahren nach einem der Ansprüche 1 bis 4, wobei nach einem ersten Anruf, der von einem rufenden Endgerät beliebigen (TA) kommt und anfänglich für das erste Endgerät (TB) bestimmt ist und durch den Server für Dienste (S) empfangen wird, ein zweiter Anruf, der von dem Server für Dienste (S) kommt und für das zweite Endgerät (X_{B}) bestimmt ist, durch den dritten Telefonvermittler oder das zweite Endgerät (X_{B}) zu dem ersten Endgerät (TB) weitergeleitet wird, und
wenn die das erste Endgerät (TB) versorgende Telefonleitung belegt ist, der Server für Dienste (S) eine Verbindung mit einem dritten Endgerät (TC) herstellt, wobei eine Verbindung zwischen dem beliebigen rufenden Endgerät (TA) und dem Server für Dienste (S), die dem ersten Anruf entspricht, dann mit der Verbindung zwischen dem Server für Dienste (S) und dem dritten Endgerät (TC) zusammengeführt wird, und
wenn die Telefonleitung des ersten Endgeräts (TB) nicht belegt ist, eine Verbindung zwischen dem beliebigen rufenden Endgerät (TA) und dem Server für Dienste (S), die dem ersten Anruf entspricht, mit einer Verbindung zwischen dem Server für Dienste (S) und dem ersten Endgerät (TB) zusammengeführt wird, die dem zweiten Anruf entspricht.

7. Verfahren nach einem der Ansprüche 1 bis 4, wobei nach einem ersten Anruf, der von einem beliebigen rufenden Endgerät (TA) kommt und anfänglich für das erste Endgerät (TB) bestimmt ist und durch den Server für Dienste (S) empfangen wird, ein zweiter Anruf, der von dem Server für Dienste (S) kommt und für das zweite Endgerät (X_{B}) bestimmt ist, durch den dritten Telefonvermittler oder das zweite Endgerät (X_{B}) zu dem ersten Endgerät (TB) weitergeleitet wird, und wenn die das erste Endgerät (TB) versorgende Telefonleitung nicht belegt ist,
im Fall einer Antwort des ersten Endgeräts (TB) während einer vorbestimmten Wartezeit, eine Verbindung zwischen dem beliebigen rufenden Endgerät (TA) und dem Server für Dienste (S), die dem ersten Anruf entspricht, mit einer Verbindung zwischen dem Server für Dienste (S) und dem ersten Endgerät (TB) zusammengeführt wird, die dem zweiten Anruf entspricht, und
beim Fehlen einer Antwort des ersten Endgeräts (TB) während der vorbestimmten Wartezeit, der Server für Dienste (S) eine Verbindung mit einem dritten Endgerät (TC) herstellt, und eine Verbindung zwischen dem beliebigen rufenden Endgerät (TA) und dem Server für Dienste (S), die dem ersten Anruf entspricht, mit der Verbindung zwischen dem Server für Dienste (S) und dem dritten Endgerät (TC) zusammengeführt wird.

8. Verfahren nach einem der Ansprüche 1 bis 4, wobei der Teilnehmer vorab die Nummer eines speziellen rufenden Endgeräts in dem Server für Dienste (S) während einer Verbindung mit diesem letzteren von dem ersten Endgerät (TB) aus einprogrammiert, und
nach einem ersten Anruf, der von dem speziellen rufenden Endgerät kommt und anfänglich für das erste Endgerät (TB) bestimmt ist und durch den Server für Dienste (S) empfangen wird, der Server für Dienste (S) eine Verbindung mit einem dritten Endgerät (TC) erstellt, wobei eine Verbindung zwischen dem speziellen rufenden Endgerät und dem Server für Dienste (S), die dem ersten Anruf entspricht, dann mit der Verbindung zwischen dem Server für Dienste (S) und dem dritten Endgerät (TC) zusammengeführt wird, und
nach einem zweiten Anruf, der von einem anderen rufenden Endgerät kommt und anfänglich für das erste Endgerät (TB) bestimmt ist und durch den Server für Dienste (S) empfangen wird, ein dritter Anruf, der von dem Server für Dienste (S) kommt und für das zweite Endgerät (X_{B}) bestimmt ist, durch den dritten Telefonvermittler oder das zweite Endgerät (X_{B}) zu dem ersten Endgerät (TB) weitergeleitet wird und eine Verbindung zwischen dem anderen rufenden Endgerät und dem Server für Dienste (S), die dem zweiten Anruf entspricht, mit einer Verbindung zwischen dem Server für Dienste (S) und dem ersten Endgerät (TB) zusammengeführt wird, die dem dritten Anruf entspricht.

9. Verfahren nach einem der Ansprüche 1 bis 4, wobei der Teilnehmer in dem Server für Dienste (S) während einer Verbindung mit diesem letzteren von dem ersten Endgerät (TB) aus die Nummer eines speziellen rufenden Endgerät einprogrammiert, von dem der Teilnehmer keinen Anruf zu empfangen wünscht, und nach einem ersten Anruf, der von einem anderen rufenden Endgerät kommt und anfänglich für das erste Endgerät (TB) bestimmt ist und durch den Server für Dienste (S) empfangen wird, ein zweiter Anruf, der von dem Server für Dienste (S) kommt und für das zweite Endgerät (X_{B}) bestimmt ist, durch den dritten Telefonvermittler oder das zweite Endgerät (X_{B}) zu dem ersten Endgerät (TB) weitergeleitet wird, wobei eine Verbindung zwischen dem anderen rufenden Endgerät und dem Server für Dienste (S), die dem ersten Anruf entspricht, dann mit einer Verbindung zwischen dem Server für Dienste (S) und dem ersten Endgerät (TB) zusammengeführt wird, die dem zweiten Anruf entspricht.

10. Verfahren nach einem der Ansprüche 1 bis 4, wobei nach jedem Anruf, der von einem beliebigen Anrufer (TA) kommt und anfänglich für das erste Endgerät (TB) bestimmt ist und durch den Server für Dienste (S) empfangen wird, ein Anruf, der von dem Server für Dienste (S) kommt und für das zweite Endgerät (X_{B}) bestimmt ist, durch den dritten Telefonvermittler oder das zweite Endgerät (X_{B}) zu dem ersten Endgerät (TB) weitergeleitet wird und der Server für Dienste (S) zu dem ersten Endgerät (TB) die Nummer und/oder den Namen des beliebigen Anrufers (TA) überträgt.

11. Verfahren nach einem der Ansprüche 1 bis 4, wobei nach jedem Anruf, der von einem beliebigen Anrufer (TA) kommt und anfänglich für den Teilnehmer bestimmt ist und durch den Server für Dienste (S) empfangen wird, der Server für Dienste (S) die Nummer und/oder den Namen des beliebigen Anrufers (TA) speichert, wobei die Nummer und/oder der Name später durch den Teilnehmer (TB) während einer mit dem Server für Dienste (S) hergestellten Verbindung abgefragt werden kann.

## Claims

1. A method of providing services in a service server (S) to a subscriber of a telephone network (RTC) having a first terminal (TB) connected to a first telephone exchange (C_{B}) of said telephone network, the telephone network (RTC) prohibiting calls from being forwarded at least two times in succession, **characterized in that** all the calls to said first terminal (TB) are forwarded by said first telephone exchange (C_{B}) to the service server (S) connected to a second telephone exchange of said telephone network (RTC), and if one of the services provided by the service server (S) necessitates a call to the first terminal (TB), a call from the service server (S) is routed to a second terminal (X_{B}) which is connected to a third telephone exchange of said telephone network (RTC) and which all calls addressed to the second terminal are forwarded to the first terminal (TB) by the third telephone exchange or the second terminal (X_{B}).

2. A method according to claim 1, wherein the second and third telephone exchanges are one and the same telephone exchange, preferably coincident with the first telephone exchange (C_{B}).

3. A method according to claim 1 or 2, wherein a voice interface (S2) is coupled to said service server (S).

4. A method according to any one of claims 1 to 3, wherein said second terminal (X_{B}) is a virtual subscriber terminal included in a server (X) and is accessible, preferably by Direct Inward Dialing (DID).

5. A method according to any one of claims 1 to 4, wherein after each call from any calling terminal (TA) initially addressed to the first terminal (TB) and received by the service server (S), the service server (S) can set up a call to a third terminal (TC), and a call between the any calling terminal (TA) and the service server (S), which corresponds to said call from any calling terminal (TA), being then joined to the call between the service server (S) and the third terminal (TC).

6. A method according to any one of claims 1 to 4, wherein after a first call from any calling terminal (TA) initially addressed to the first terminal (TB) and received by the service server (S), a second call from the service server (S) addressed to the second terminal (X_{B}) is forwarded by the third telephone exchange or the second terminal (X_{B}) to the first terminal (TB), and
if the telephone line to which the first terminal (TB) is connected is busy, the service server (S) sets up a call to a third terminal (TC), a call between any calling terminal (TA) and the service server (S) corresponding to the first call being then joined to the call between the service server (S) and the third terminal (TC), and
if the telephone line of the first terminal (TB) is not busy, a call between the any calling terminal (TA) and the service server (S) corresponding to the first call is joined to a call between the service server (S) and the first terminal (TB) corresponding to the second call.

7. A method according to any one of claims 1 to 4, wherein after a first call from any calling terminal (TA) initially addressed to the first terminal (TB) and received by the service server (S), a second call initiated by the service server (S) and addressed to the second terminal (X_{B}) is forwarded by the third telephone exchange or the second terminal (X_{B}) to the first terminal (TB), and if the telephone line to which the first terminal (TB) is connected is not busy,
in the event of response from the first terminal (TB) during a predetermined time-delay, a call between any calling terminal (TA) and the service server (S) corresponding to the first call is joined to a call between the service server (S) and the first terminal (TB) corresponding to the second call, and
if the first terminal (TB) does not respond during said predetermined time-delay, the service server (S) sets up a call to a third terminal (TC), and a call between any calling terminal (TA) and the service server (S) corresponding to the first call is joined to the call between the service server (S) and the third terminal (TC).

8. A method according to any one of claims 1 to 4, wherein said subscriber programs beforehand the telephone number of a particular calling terminal in the service server (S) during a call to the latter from the first terminal (TB), and
after a first call initiated by the particular calling terminal initially addressed to the first terminal (TB) and received by the service server (S), the service server (S) sets up a call to a third terminal (TC), a call between the particular calling terminal and the service server (S), which corresponds to the first call being then joined to the call between the service server (S) and the third terminal (TC), and
after a second call initiated by another calling terminal initially addressed to the first terminal (TB) and received by the service server (S), a third call initiated by the service server (S) and addressed to the second terminal (X_{B}) is forwarded by the third telephone exchange or the second terminal (X_{B}) to the first terminal (TB), and a call between the other calling terminal and the service server (S) corresponding to the second call is joined to a call between the service server (S) and the first terminal (TB) corresponding to the third call.

9. A method according to any one of claims 1 to 4, wherein said subscriber programs in the service server (S), during a call to the latter from the first terminal (TB), the number of a particular calling terminal from which the subscriber does not wish to receive calls, and, after a first call initiated by another calling terminal initially addressed to the first terminal (TB) and received by the service server (S), a second call initiated by the service server (S) and addressed to the second terminal (X_{B}) is forwarded by by the third telephone exchange or the second terminal (X_{B}) to the first terminal (TB), a call between the other calling terminal and the service server (S) corresponding to the first call being then joined to a call between the service server (S) and the first terminal (TB) corresponding to the second call.

10. A method according to any one of claims 1 to 4, wherein after each call initiated by any calling party (TA) initially addressed to the first terminal (TB) and received by the service server (S), a call initiated by the service server (S) and addressed to the second terminal (X_{B}) is forwarded by the third telephone exchange or the second terminal (X_{B}) to the first terminal (TB) and the service server (S) transmits to the first terminal (TB) the number and/or the name of the calling party (TA).

11. A method according to any one of claims 1 to 4, wherein after each call initiated by any calling particular (TA), initially addressed to the subscriber and received by the service server (S), the service server memorizes the telephone number and/or the name of any calling particular (TA), the number and/or name being consulted subsequently by the subscriber (TB) during a call to the service server (S).
